# FASCICULE DE BREVET EUROPEEN

(11) **EP 2 253 941 B1**
(45) Date de publication et mention de la délivrance du brevet: **23.08.2017**
(21) Numéro de dépôt: 10163123.2
(22) Date de dépôt: 18.05.2010
(51) Int. Cl.: G01F 11/02

(54) **Dispositif pour délivrer des quantités dosées de produit liquide ou pâteux**
Vorrichtung zum Abgeben dosierter Mengen eines flüssigen oder pastösen Produkts
Device for delivering metered quantities of a liquid or pasty product

(30) Priorité: 19.05.2009 FR 0953324
(43) Date de publication de la demande: 24.11.2010
(73) Titulaire: ERCA, 91940 Les Ulis (FR)
(72) Inventeur: Schwab, Dominique, 78000 Versailles (FR); Cooper, Timothy, 94240 L'HAYE LES ROSES (FR); Guyot, Gilles, 91470 Limbours (FR)
(74) Mandataire: Intès, Didier Gérard André

(56) Documents cités:
- EP-A1- 0 399 947
- DE-A1- 2 924 138
- FR-A1- 2 299 224

## Description

La présente invention concerne un dispositif pour délivrer des quantités dosées de produit liquide ou pâteux, comprenant au moins un équipement de dosage et de délivrance de produit, qui comporte une chambre de dosage formée dans un cylindre, la chambre présentant une première extrémité à laquelle sont situées une entrée de produit et une sortie de produit et une deuxième extrémité délimitée par un piston qui est mobile en va-et-vient dans le cylindre, entre une position de remplissage permettant l'alimentation en produit de la chambre par l'entrée de produit et une position d'évacuation permettant la délivrance du produit contenu dans la chambre par la sortie de produit, l'entrée de produit étant apte à être ouverte pour le remplissage de la chambre et à être fermée pour l'évacuation de la chambre, le piston étant manoeuvré par une tige de manoeuvre qui s'étend, à partir dudit piston, dans le sens allant de la première vers la deuxième extrémité de la chambre et qui sort du cylindre, la tige de manoeuvre étant reliée, à l'extérieur du cylindre, à une tige de commande qui, à partir de sa liaison avec la tige de manoeuvre, s'étend dans le sens allant de la deuxième vers la première extrémité de la chambre et qui est elle-même actionnée en va-et-vient à partir de son extrémité située du côté de la première extrémité de la chambre.

Au sens de la présente invention, le produit liquide ou pâteux est un produit, se comportant globalement comme un fluide plus ou moins visqueux et pouvant être délivré comme un liquide ou une pâte, par une buse. Il s'agit en particulier d'un produit alimentaire, tel qu'une boisson, un yaourt, une compote ou analogue. Cependant, ce produit peut comporter des morceaux englobés dans le fluide. Il s'agit par exemple de morceaux de fruits ou de céréales.

On connaît des dispositifs dans lesquels le piston est manoeuvré directement à partir de sa tige de manoeuvre, au droit du cylindre. En général, le sens allant de la première vers la deuxième extrémité de la chambre est, dans une direction verticale, le sens qui va vers le bas. Il en résulte que, dans ces dispositifs connus, le piston est manoeuvré sous la chambre de dosage. Bien que le piston coopère avec la paroi intérieure de la chambre de dosage de manière quasi étanche, des fuites de produit peuvent survenir, auquel cas la tige de manoeuvre et son mécanisme d'actionnement sont souillés par ce produit. Le dispositif d'actionnement de la tige de manoeuvre risque donc d'être souillé, alors qu'il s'agit d'un dispositif relativement difficile à nettoyer.

On connaît, par le document DE 29 24 138, un dispositif du type indiqué en préambule, dont le piston est manoeuvré par une tige de commande située à l'extérieur du cylindre. Si ce dispositif est éventuellement plus aisé à nettoyer que ceux de l'art antérieur précité, il n'évite pas pour autant les risques de souillure de l'environnement.

EP 0 399 947 divulgue un système de dosage utilisant un boisseau rotatif.

FR 2 299 224 propose d'actionner conjointement plusieurs pistons de dosage à l'aide d'un système connu d'actionnement.

L'invention vise à remédier aux inconvénients précités, en proposant un dispositif dans lequel le mécanisme d'actionnement du piston puisse être écarté d'une zone du dispositif susceptible d'être souillée par le produit dosé et dans lequel on évite les souillures de l'environnement.

Ce but est atteint grâce au fait que l'extrémité du cylindre opposée à la première extrémité de la chambre de dosage est ouverte dans une enceinte de réception, dans laquelle s'étend la tige de commande.

Ainsi, c'est la tige de commande, reliée à la tige de manoeuvre, qui coopère avec le dispositif d'actionnement du piston. Ce dernier peut donc être situé du côté de la première extrémité de la chambre de dosage, à un endroit non susceptible d'être souillé par d'éventuelles fuites de produit. Par ailleurs, l'invention présente l'avantage de faire en sorte que les différents systèmes de commande du dispositif, comprenant le mécanisme d'actionnement précité, et également le mécanisme permettant d'ouvrir ou de fermer l'entrée de produit soient tous situés dans une même région du dispositif, c'est-à-dire au voisinage de la première extrémité de la chambre. L'ergonomie générale du dispositif est donc plus rationnelle que dans l'art antérieur, ce qui facilite sa manipulation et sa maintenance.

L' enceinte de réception, astucieusement située à l'extrémité du cylindre opposée à la première extrémité de la chambre de dosage, permet de collecter d'éventuelles fuites de produit et protège donc l'environnement du dispositif par rapport à de telles fuites. Le fait que la tige de commande s'étende dans cette enceinte permet efficacement d'éviter les risques de souillure de l'environnement sans gêner la commande du piston.

Avantageusement, les première et deuxième extrémités de la chambre de dosage sont respectivement les extrémités supérieure et inférieure de ladite chambre.

Ainsi, l'entrée et la sortie de produit sont situées vers le haut du cylindre. Ceci favorise la précision du dosage. En effet, les bulles d'air qui peuvent être générée dans le piston ont naturellement tendance à remonter vers le haut du piston. Elles peuvent être chassées à chaque actionnement du piston, lors de l'évacuation du produit dosé, sans s'accumuler dans une région du cylindre, étant noté qu'une telle accumulation réduirait le volume utile du cylindre. L'extrémité inférieure du cylindre est ouverte dans l'enceinte de réception.

Ainsi, l'enceinte de réception se trouve sous le cylindre et les éventuelles fuites de produit s'y déposent naturellement, par gravité.

Avantageusement, l'extrémité ouverte du cylindre est aménagée pour permettre au piston d'adopter une position de dégagement, dans laquelle le piston est dégagé du volume de la chambre de dosage.

Lorsque le piston est dans cette position de dégagement, l'ensemble du dispositif peut être lavé par circulation d'un liquide de lavage dans la chambre de dosage, et autour du piston dans sa position dégagée. Le fait que le piston est dégagé du volume de la chambre signifie que, dans sa position de dégagement, il ne délimite pas le volume utile de la chambre, servant à doser le produit. En d'autres termes, le piston est suffisamment éloigné de la position qu'il occupe pour le remplissage de la chambre dans le sens allant de la première extrémité vers la deuxième extrémité du cylindre dans lequel est formée cette chambre, pour permettre le passage du produit de lavage dans l'intégralité du volume utile de la chambre.

Il est avantageux que l'extrémité ouverte de la chambre présente une ouverture permettant l'extraction complète du piston par rapport au cylindre en position de dégagement du piston.

Selon ces dispositions, le dégagement du piston par rapport au volume de la chambre de dosage peut être tel que ce piston en soit complètement extrait. Ceci permet notamment de dégager d'éventuels morceaux relativement importants de produit qui pourraient rester contenus dans la chambre ou coincés entre le piston et la paroi de la chambre. En effet, il n'est pas exclu que le produit dont le dispositif de l'invention sert à délivrer des doses, comporte des morceaux qui, en l'absence de lavage, risqueraient de rester coincés dans le dispositif.

Avantageusement, le dispositif comporte des moyens pour, lorsque le piston est en position de dégagement, permettre un lavage de la chambre en évacuant un liquide de lavage par l'extrémité ouverte du cylindre.

Le fait d'utiliser l'extrémité ouverte du cylindre pour évacuer le liquide de lavage permet de faire en sorte que ce liquide lave non seulement la chambre de dosage, mais également la tige de commande, sa liaison avec la tige de manoeuvre, et une partie de la tige de manoeuvre (celle qui se trouve dans l'enceinte de lavage lorsque celle-ci est présente). En effet, l'enceinte de réception peut servir pour le lavage du dispositif, en le protégeant de l'environnement extérieur.

Avantageusement, le dispositif comporte plusieurs équipements de dosage et de délivrance de produit similaires, dont les pistons respectifs sont actionnés par un système d'actionnement commun.

Dans ce cas, le dispositif permet de doser et de délivrer simultanément plusieurs doses de produit. Le fait d'utiliser à cet égard un système d'actionnement commun simplifie l'ergonomie du dispositif et sa manipulation. De plus, ceci permet d'assurer un synchronisme parfait.

Dans ce cas, avantageusement, les tiges de manoeuvre des pistons respectifs sont reliées à la tige de commande par une liaison commune.

Ainsi, grâce à une seule tige de commande reliée par la liaison commune aux différentes tiges de manoeuvre, on peut actionner aisément simultanément tous les pistons. Par exemple, le dispositif peut comporter deux, trois ou quatre équipements, voire davantage.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue schématique en coupe longitudinale du dispositif selon l'invention, sur laquelle le piston est dans sa position reculée, permettant l'alimentation en produit de la chambre de dosage ;
- la figure 2 montre le même dispositif alors que le piston est dans sa position avancée, permettant la délivrance du produit contenu dans la chambre de dosage ;
- la figure 3 montre le même dispositif alors que le piston est dans sa position de dégagement, permettant le lavage du dispositif ;
- les figures 4, 5 et 6 sont des vues correspondant à celles des figures 1, 2 et 3 montrant de manière plus détaillée un dispositif conforme à l'invention, comportant plusieurs équipements de dosage et de délivrance ;
- la figure 7 est une vue schématique, en coupe partielle et en perspective du dispositif des figures 5 à 7 ;
- les figures 8A et 8B sont des vues en coupe dans le plan VIII-VIII des figures 4 et 5, pour un équipement de dosage et de délivrance, et la figure 8C est une coupe dans le même plan, pour une autre position; et
- les figures 9 et 10 illustrent une variante pour les moyens permettant de fermer ou d'ouvrir l'entrée de produit, respectivement dans les positions fermée et ouverte de cette entrée.

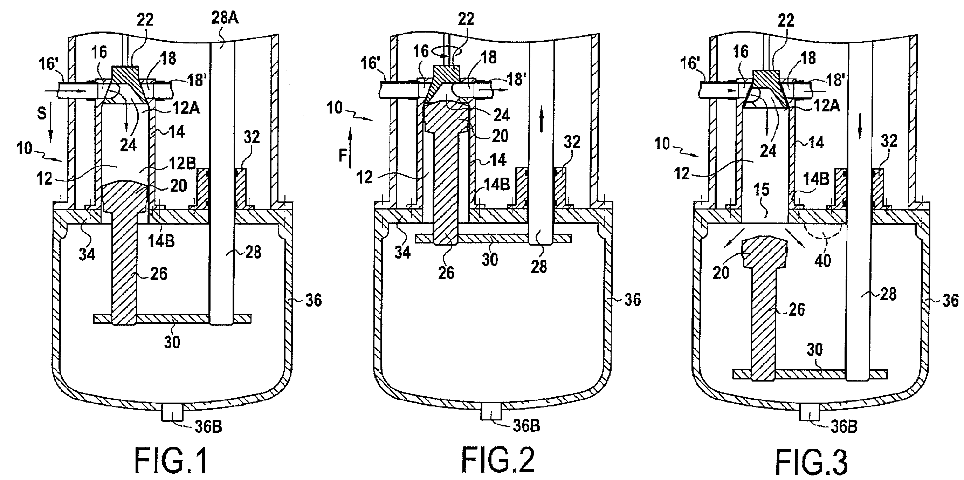

Le dispositif représenté sur les figures 1 à 3 comprend un équipement de dosage et de délivrance de produit 10. Cet équipement comprend une chambre de dosage 12, qui est formée dans un cylindre 14. Une entrée de produit 16 et une sortie de produit 18 sont formées à une première extrémité 12A de la chambre. La deuxième extrémité 12B de la chambre est formée par une paroi mobile, délimitée par un piston 20 qui, comme on le comprend en comparant les figures 1 à 3, est mobile en va-et-vient dans le cylindre 14.

A la première extrémité 12A de la chambre est situé un boisseau conique 22 présentant un passage interne 24 pour le produit. Le piston 20 est manoeuvré par une tige de manoeuvre 26 qui s'étend, à partir de ce piston 20, dans le sens S allant de la première extrémité 12A de la chambre vers la deuxième extrémité 12B de cette dernière. On voit que cette tige de manoeuvre 26 sort du cylindre 14.

En général, le sens S est celui qui va du haut vers le bas dans une direction verticale. Ainsi, par convention, on considèrera que les première et deuxième extrémités 12A et 12B de la chambre de dosage 12 sont respectivement son extrémité supérieure et son extrémité inférieure. D'une manière générale, les éléments inférieurs et supérieurs seront définis par rapport au sens S, considérés du haut vers le bas.

A l'extrémité inférieure 14B du cylindre 14 (c'est-à-dire son extrémité opposée à la première extrémité de la chambre 12), la tige de manoeuvre 26 est reliée à une tige de commande 28, par une liaison 30, par exemple une tige ou une plaque. On voit que, à partir de cette liaison 30, la tige de commande 28 s'étend vers le haut, dans le sens inverse F au sens S.

Cette tige de commande peut ainsi être actionnée à partir de son extrémité 28A qui est située du côté de la première extrémité 12A de la chambre de dosage 12. Le déplacement en va-et-vient de la tige de commande 128 est guidé par un palier axial 32 avec lequel coopère par glissement la partie d'extrémité supérieure 128A de la tige de commande. Ce palier 32 est situé au même niveau que l'extrémité inférieure du cylindre 14, et est, comme cette extrémité inférieure, fixé à une plaque de fixation 34 à partir de laquelle s'étend vers le bas une enceinte de réception 36. On voit que l'extrémité inférieure 14B du cylindre est ouverte dans cette enceinte de réception, et que la tige de commande 26, la liaison 30, et la tige de manoeuvre 28 (ou, plus précisément, la partie inférieure de cette tige 28) s'étendent dans cette enceinte.

Sur la figure 1, le piston 20 est situé au voisinage de l'extrémité inférieure du cylindre 14B, de sorte que l'extrémité inférieure 12B de la chambre est proche de cette extrémité inférieure 14B. Le volume de la chambre 12 est donc maximal, pour permettre le remplissage de cette chambre par une dose de produit qui y pénètre par son entrée 16, alors en communication avec le passage interne 24 du boisseau 22. Dans cette situation, la sortie 18 de la chambre de dosage 12 est quant à elle fermée par la paroi du boisseau. Bien entendu, ces entrée et sortie 16 et 18 sont reliées à des conduites servant respectivement à l'alimentation et à l'échappement du produit, respectivement désignées pas les références 16' et 18'.

Sur la figure 2, le piston 20 est en position haute, et le boisseau 22 a tourné d'un angle suffisant pour mettre en registre la sortie de produit 18 et le passage interne 24 de ce boisseau. Ainsi, le produit dosé peut s'évacuer par la sortie 18. Dans cette situation, la tige de manoeuvre 26, la liaison 30 et la tige de commande 28 ont été déplacées dans le sens F opposé au sens S c'est-à-dire vers le haut dans l'exemple représenté. Dans cette situation, les extrémités inférieures des tiges 26 et 28, de même que la liaison 30 sont situées au voisinage de l'extrémité inférieure du cylindre 14B et de la plaque de fixation 34, c'est-à-dire qu'elles sont situées en partie haute de l'enceinte de réception 36.

La figure 3 montre la position de dégagement du piston 20. On voit que, dans cette position, ce piston est extrait de la chambre 12, et même du cylindre 14. Ceci correspond à un déplacement maximum du piston 20, de sa tige de manoeuvre 26, de la liaison 30 et de la tige de commande 28 dans le sens S. Ainsi, dans cette situation, la liaison 30 est située en partie inférieure de l'enceinte de réception 36. Cette situation permet le lavage de l'équipement de dosage, et on comprend que, l'orientation du boisseau 22 étant telle que le passage interne 24 de ce boisseau est en registre avec l'entrée 16 de la chambre, un liquide de lavage peut être injecté par cette entrée, pour rincer la chambre de lavage et la tête du piston. Ce liquide rince également la tige de manoeuvre 26, la liaison 30 et la partie inférieure de la tige de commande 28 situées dans l'enceinte 36.

On voit que l'espace entre le piston 20 et l'extrémité inférieure 14B du cylindre 14 est suffisant pour permettre un large passage du liquide de lavage. Ceci permet d'entraîner avec ce liquide d'éventuels morceaux de produit qui auraient pu rester coincés dans le dispositif.

Bien entendu, alternativement, le liquide de lavage pourrait entrer par la sortie 18 de produit, le boisseau étant alors positionné dans la position de la figure 2.

Quelle que soit l'entrée utilisée pour le produit de lavage, il est avantageux que, comme le montre la figure 3, le boisseau 22 soit légèrement décollé de son siège pour faciliter le lavage à l'interface boisseau/siège et sur le bord des orifices d'entrée 16 et de sortie 18.

Pour évacuer le liquide de lavage, la paroi inférieure de l'enceinte 36 est pourvue d'un orifice d'évacuation 36B dont les dimensions sont également assez importantes pour permettre l'évacuation d'éventuels morceaux de produit.

On comprend que l'extrémité ouverte 14B du cylindre présente une ouverture 15 de dimension suffisante pour permettre l'extraction complète du piston 20 par rapport au cylindre 14. En pratique, les dimensions radiales internes de cette ouverture correspondent aux dimensions radiales externes du piston 20, ou sont supérieures. Dans l'exemple représenté, du liquide de lavage est introduit par l'entrée 16. On a indiqué qu'il pouvait également l'être par la sortie 18. On peut également injecter du liquide de lavage par l'enceinte 36. A cet effet, on peut par exemple équiper cette enceinte d'une ou plusieurs buses de lavage comme représenté en traits interrompus et désigné par la référence 40. Ces buses de lavage peuvent être utilisées de manière complémentaire à l'entrée principale de liquide de lavage, par l'entrée 16 ou 18, ou bien être utilisées seules, auquel cas elles sont avantageusement disposées de manière à permettre au produit de lavage de venir rincer la chambre 12, ce liquide de lavage étant alors injecté en volume et pression suffisants.

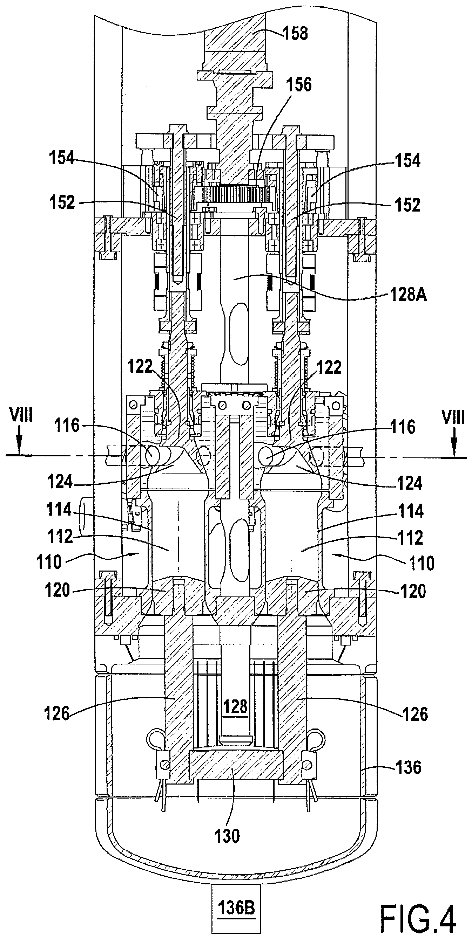

On décrit maintenant le mode de réalisation des figures 4 à 8, qui comporte plusieurs équipements de dosage et de délivrance de produit.

Sur ces figures, les éléments communs à ceux des figures 1 à 3 sont affectés des mêmes références augmentées de 100.

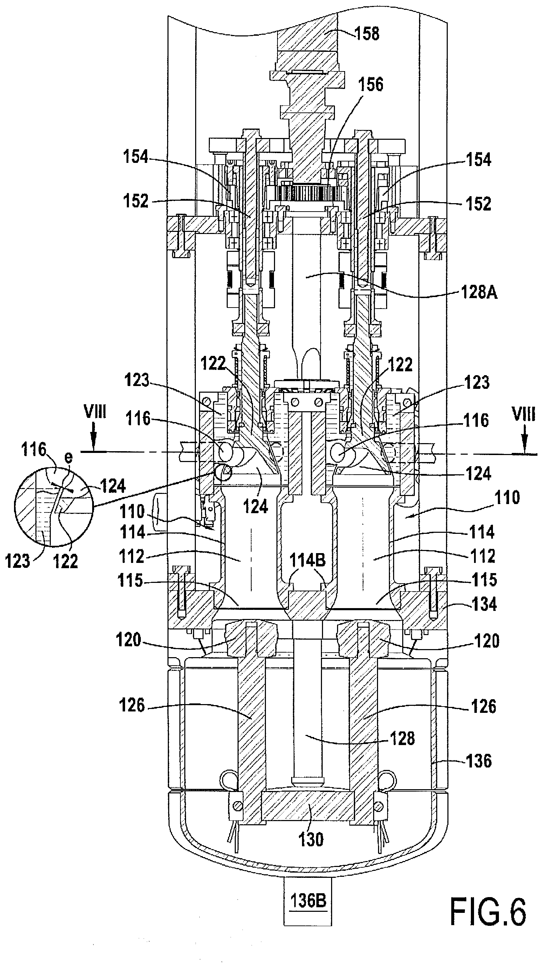

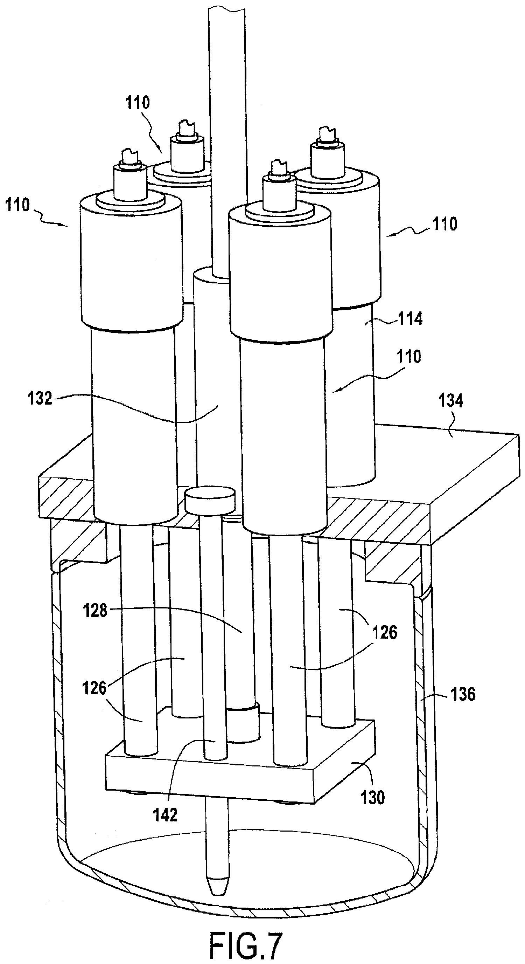

En se reportant par exemple aux figures 6 et 7, on voit que quatre cylindres 114, délimitant chacun une chambre de dosage 112, sont présents. Ces cylindres sont solidaires d'une plaque de support commune 134, sous laquelle est disposée une enceinte de réception commune 136. La liaison entre les tiges de manoeuvre respectives 126 des différents cylindres 114 est formée par une plaque de liaison commune 130, à partir de laquelle s'étend vers le haut une tige de commande commune 128. De préférence, les tiges de manoeuvre 126 des différents équipements de dosage de délivrance de produit 110 délimitent, en coupe horizontale, les quatre angles d'un carré, au centre duquel se trouve la tige de commande 128. Cette tige est par exemple une partie d'un vérin, dont le cylindre n'est pas représenté. Le palier 132 de la tige de commande 128 est situé entre les cylindres 114.

Pour éviter les torsions de l'assemblage des quatre équipements 110, un système anti-rotation, comprenant une tige de blocage en rotation 142, fixée à la plaque 134 et traversant un perçage de la plaque de liaison 130 permettant le coulissement de cette plaque par rapport à cette tige, est prévu.

Pour chaque équipement, un boisseau 122, disposé dans un corps 123 raccordé à la première extrémité du cylindre 114, permet de faire sélectivement communiquer l'entrée ou la sortie avec le volume intérieur de la chambre.

La figure 4 montre l'ensemble des équipements de dosage 110 alors que les pistons 120 sont en position basse dans les cylindres 114 des différents équipements 110, de telle sorte que le volume des chambres 112 est maximal. Les boisseaux 122 des différents équipements sont tous placés dans leurs positons mettant en registre leurs passages internes respectifs 124 avec les entrées de produit 116 des différents équipements.

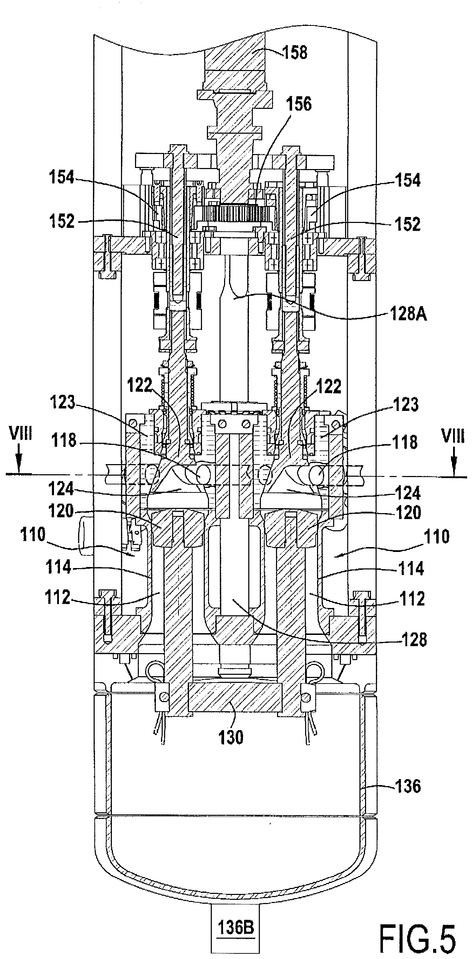

Sur la figure 5, les pistons 120 des différents équipements 110 sont dans leurs positions hautes dans lesquelles le volume des chambres de dosage 112 est minimum. Les boisseaux 122 ont été tournés de manière à mettre en registre les sorties de produit 118 avec les passages internes 124 de ces boisseaux.

Les boisseaux sont entraînés en rotation par un système d'entraînement commun. Dans l'exemple représenté, celui-ci comprend des extensions axiales 152 des boisseaux formés par des tiges solidaires de roues d'entraînement 154 qui coopèrent toutes avec un pignon central d'entraînement 156 lui-même entraîné en rotation par un arbre commun 158.

Sur la figure 6, les pistons 120 sont dans leurs positions de dégagement, dans lesquelles le volume des chambres 112 est dégagé. On voit que ces pistons sont sortis des extrémités inférieures 14B des cylindres, tout en restant globalement dans l'encombrement de la plaque de fixation 134 à laquelle sont fixées les extrémités inférieures des cylindres et à laquelle est suspendue l'enceinte 136. On constate que, pour guider la rentrée des pistons dans les cylindres, les extrémités inférieures de ces derniers sont évasées vers le bas.

Dans l'exemple représenté sur la figure 6, le liquide de lavage entre dans les différents équipements de dosage et de délivrance de produit par les entrées 116 des chambres 112. Les boisseaux sont alors évidemment dans leurs positions 122 mettant leurs passages internes 124 en registre avec ces sorties 116. Ils sont également décollés de leurs sièges, comme indiqué par l'espace e. Le liquide de lavage sort par les ouvertures 115 des extrémités inférieures 114B des cylindres 114 et vient doucher les pistons 120, leurs tiges de commande 126, la plaque de liaison 130 et la partie inférieure de la tige de commande 128. Le liquide de lavage peut s'évacuer par l'orifice d'évacuation 136B de l'enceinte 136.

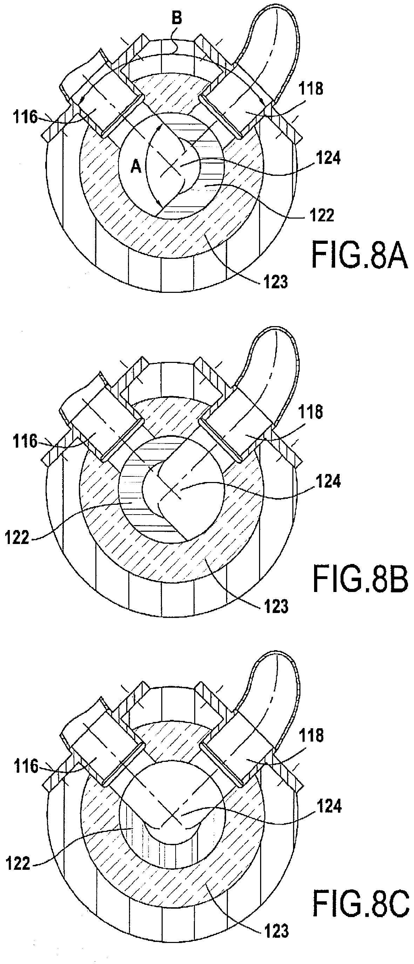

Les figures 8A, 8B et 8C sont des vues en coupe dans le plan VIII-VIII des figures 4 et 5, montrant l'organisation du boisseau 122 et celle des entrée 116 et sortie 118 de la chambre 112, pour un équipement de dosage.

Dans l'exemple représenté, le boisseau 122 est apte à adopter les positions suivantes :
- une position d'alimentation, visible sur la figure 8A, dans laquelle il fait communiquer l'entrée de produit 116 avec le volume de la chambre de dosage en isolant l'entrée 116 par rapport à la sortie 118 ;
- une position de délivrance dans laquelle il fait communiquer la sortie de produit 118 avec le volume de la chambre en isolant la sortie 118 par rapport à l'entrée 116 ;
- et une position de court-circuit, dans laquelle il fait communiquer entre elles l'entrée 116 et la sortie 118.

A cet effet, on voit que le passage interne 124 du boisseau couvre un angle A sensiblement égal à l'angle B entre l'entrée 116 et la sortie 118 de la chambre, cet angle étant inférieur à 180°. En l'espèce, cet angle est de l'ordre de 90°.

Sur la figure 8A, le boisseau est dans une position angulaire telle que son passage interne 124 ne communique qu'avec l'entrée 116. Sur la figure 8B, le boisseau a tourné de 180° pour que son passage interne 124 ne communique qu'avec la sortie 118. Sur la figure 8C, le boisseau est dans une position intermédiaire entre celles des figures 8A et 8B, et il communique simultanément avec l'entrée et avec la sortie.

Cette possibilité de placer l'entrée et la sortie en court-circuit est particulièrement intéressante au démarrage du dosage et de la délivrance de produit. En effet, la communication directe entre l'entrée et la sortie permet au produit de circuler rapidement, alors que le piston est dans sa position d'évacuation, pour purger l'air éventuellement présent en partie haute de la chambre et dans les entrée et sortie, en poussant l'air devant lui.

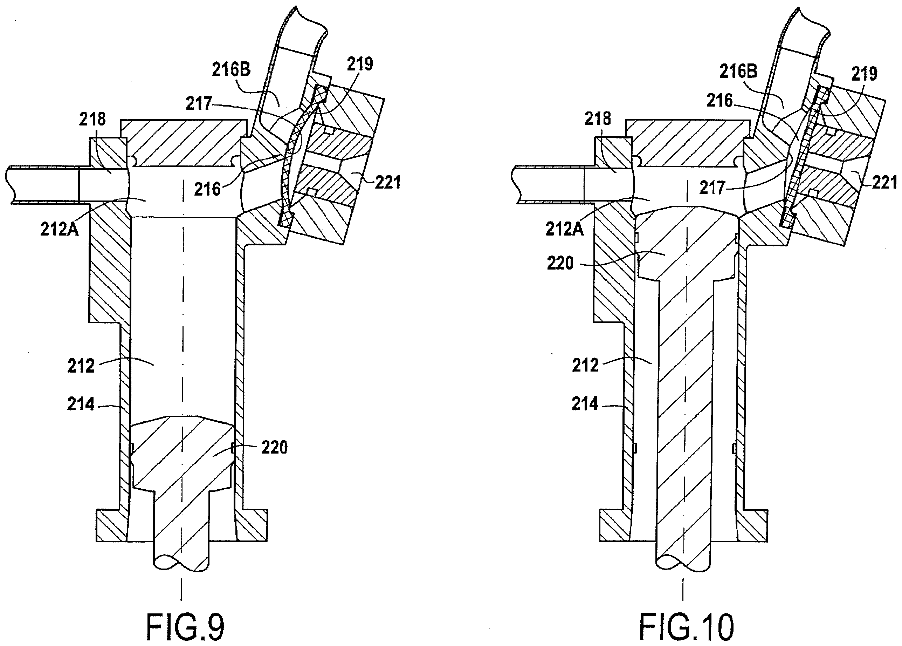

Sur les figures 9 et 10, on a représenté seulement un cylindre 214, un piston 220, et une chambre de dosage 212 avec son entrée et sa sortie de produit, ainsi que le système d'ouverture/fermeture de l'entrée de produit. On comprend que, dans cet exemple, la sortie de produit 218 est en permanence ouverte dans l'extrémité supérieure 212A de la chambre 212. L'entrée 216 est, quant à elle, réalisée en deux parties, respectivement 216A côté chambre et 216B côté extérieur. Ces deux parties sont reliées entre elles par un siège 217 pour une membrane déformable 219 qui peut être déformée par de l'air comprimé injecté contre sa face arrière par une buse 221 pour venir se plaquer contre le siège 217 précité comme le montre la figure 9. Par aspiration d'air par la buse 221, la membrane 219 peut être écartée du siège 217 comme on le voit sur la figure 10 de manière à libérer le passage de produit par l'entrée 216.

## Revendications

1. Dispositif pour délivrer des quantités dosées de produit liquide ou pâteux, comprenant au moins un équipement de dosage et de délivrance de produit (10, 110), qui comporte une chambre de dosage (12, 112, 212) formée dans un cylindre (14, 114, 214), la chambre présentant une première extrémité (12A, 112A, 212A) à laquelle sont situées une entrée de produit (16, 116, 216) et une sortie de produit (18, 118, 218) et une deuxième extrémité (12B, 112B) délimitée par un piston (20, 120, 220) qui est mobile en va-et-vient dans le cylindre (14, 114, 214), entre une position de remplissage permettant l'alimentation en produit de la chambre par l'entrée de produit et une position d'évacuation permettant la délivrance du produit contenu dans la chambre par la sortie de produit, l'entrée de produit étant apte à être ouverte pour le remplissage de la chambre et à être fermée pour l'évacuation de la chambre, le piston étant manoeuvré par une tige de manoeuvre (26, 126) qui s'étend, à partir dudit piston, dans le sens (S) allant de la première vers la deuxième extrémité de la chambre et qui sort du cylindre, la tige de manoeuvre (26, 126, 226) étant reliée, à l'extérieur du cylindre, à une tige de commande (28, 128, 228) qui, à partir de sa liaison (30, 130) avec la tige de manoeuvre, s'étend dans le sens (F) allant de la deuxième vers la première extrémité (28A, 128A) de la chambre et qui est elle-même actionnée en va-et-vient à partir de son extrémité (28A, 128A) située du côté de la première extrémité de la chambre, **caractérisé en ce que** l'extrémité du cylindre opposée à la première extrémité de la chambre de dosage (12, 112, 212) est ouverte dans une enceinte de réception (36, 136) dans laquelle s'étend la tige de commande (28, 128), et ladite enceinte de réception (36, 136) est fixée à l'extrémité du cylindre opposée à la première extrémité de la chambre de dosage (12, 112, 212) de manière à collecter d'éventuelles fuites de produit et de protéger l'environnement du dispositif par rapport à de telles fuites.

2. Dispositif selon la revendication 1, **caractérisé en ce que** les première et deuxième extrémités (12A, 112A ; 12B, 112B) de la chambre de dosage (12 ; 112 ; 212) sont respectivement les extrémités supérieure et inférieure de ladite chambre, et
**en ce que** l'extrémité inférieure (14B ; 114B) du cylindre (14 ; 114 ; 214) est ouverte dans l'enceinte de réception.

3. Dispositif selon la revendication 1 ou 2, **caractérisé en ce que** l'extrémité ouverte du cylindre (14, 114, 214) est aménagée pour permettre au piston (20, 120, 220) d'adopter une position de dégagement, dans laquelle le piston est dégagé du volume de la chambre de dosage.

4. Dispositif selon la revendication 3, **caractérisé en ce que** l'extrémité ouverte du cylindre présente une ouverture (15, 115) permettant l'extraction complète du piston par rapport au cylindre en position de dégagement du piston.

5. Dispositif selon la revendication 3 ou 4, **caractérisé en ce qu'**il comporte des moyens pour, lorsque le piston (20, 120, 220) est en position de dégagement, permettre un lavage de la chambre (12, 112, 212) en évacuant un liquide de lavage par l'extrémité ouverte (15, 115) du cylindre.

6. Dispositif selon la revendication 5, **caractérisé en ce que** l'entrée (16, 116, 216) ou la sortie (18, 118, 218) de produit sert également d'entrée pour le liquide de lavage.

7. Dispositif selon la revendication 5 ou 6, **caractérisé en ce que** l'enceinte de réception (36, 136) comprend une entrée (40) pour le liquide de lavage.

8. Dispositif selon l'une quelconque des revendications 1 à 7, **caractérisé en ce qu'**il comporte plusieurs équipements de dosage et de délivrance de produit (110) similaires, dont les pistons respectifs (122) sont actionnés par un système d'actionnement commun (128, 130).

9. Dispositif selon la revendication 8, **caractérisé en ce que** les tiges de manoeuvre (126) des pistons respectifs (112) sont reliées à la tige de commande (128) par une liaison commune (130).

10. Dispositif selon l'une quelconque des revendications 1 à 9, **caractérisé en ce que**, pour ouvrir ou fermer l'entrée de produit, il comporte une membrane déformable (219).

11. Dispositif selon l'une quelconque des revendications 1 à 10, **caractérisé en ce qu'**il comporte un boisseau rotatif (22, 122) apte à faire sélectivement communiquer l'entrée de produit (16, 116) ou la sortie de produit (18, 118) avec le volume de la chambre (12, 112).

12. Dispositif selon la revendication 11, **caractérisé en ce que** le boisseau rotatif (22, 122) est apte à adopter une position d'alimentation dans laquelle il fait communiquer l'entrée de produit (16, 116) avec le volume de la chambre (12, 112) en isolant l'entrée de produit de la sortie de produit (18, 118), une position de délivrance dans laquelle il fait communiquer la sortie de produit (18, 118) avec le volume de la chambre (12, 112) en isolant la sortie de produit de l'entrée de produit (16, 116) et une position de court-circuit, dans laquelle il fait communiquer entre elles l'entrée de produit et la sortie de produit (16, 116 ; 18, 118).

## Patentansprüche

1. Vorrichtung zur Bereitstellung von dosierten Mengen eines flüssigen oder pastenartigen Produkts, umfassend mindestens eine Ausrüstung zum Dosieren und Bereitstellen eines Produkts (10, 110), die eine Dosierkammer (12, 112, 212) umfasst, die in einem Zylinder (14, 114, 214) ausgebildet ist, wobei die Kammer ein erstes Ende (12A, 112A, 212A), an dem sich ein Produkteingang (16, 116, 216) und ein Produktausgang (18, 118, 218) befinden, und ein zweites Ende (12B, 112B) umfasst, das von einem Kolben (20, 120, 220) begrenzt ist, der in dem Zylinder (14, 114, 214) in einer Hin- und Herbewegung zwischen einer Füllposition, die die Versorgung der Kammer durch den Produkteingang mit Produkt ermöglicht, und einer Ausgabeposition, die die Bereitstellung des in der Kammer enthaltenen Produkts durch den Produktausgang ermöglicht, beweglich ist, wobei der Produkteingang geeignet ist, zum Füllen der Kammer geöffnet zu werden, und für die Ausgabe aus der Kammer geschlossen zu werden, wobei der Kolben durch eine Betätigungsstange (26, 126) betätigt wird, die sich von dem Kolben in die Richtung (S) erstreckt, die von dem ersten zum zweiten Ende der Kammer geht, und die aus dem Zylinder austritt, wobei die Betätigungsstange (26, 126, 226) außerhalb des Zylinders mit einer Steuerstange (28, 128, 228) verbunden ist, die sich ab ihrer Verbindung (30, 130) mit der Betätigungsstange in die Richtung (F) erstreckt, die von dem zweiten zum ersten Ende (28A, 128A) der Kammer geht, und die selbst in einer Hin- und Herbewegung von ihrem Ende (28A, 128A) aus, das sich auf der Seite des ersten Endes der Kammer befindet, betätigt wird, **dadurch gekennzeichnet, dass** das Ende des Zylinders entfernt von dem ersten Ende der Dosierkammer (12, 112, 212) in einen Aufnahmeraum (36, 136) offen ist, in dem sich die Steuerstange (28, 128) erstreckt, und der Aufnahmeraum (36, 136) am Ende des Zylinders entfernt von dem ersten Ende der Dosierkammer (12, 112, 212) befestigt ist, um mögliche Produktleckagen aufzufangen und die Umgebung der Vorrichtung vor solchen Leckagen zu schützen.

2. Vorrichtung gemäß Anspruch 1, **dadurch gekennzeichnet, dass** die ersten und zweiten Enden (12A, 112A, 12B, 112B) der Dosierkammer (12, 112, 212) die oberen bzw. unteren Enden der Kammer sind, und dass das untere Ende (14B, 114B) des Zylinders (14, 114, 214) in den Aufnahmeraum offen ist.

3. Vorrichtung gemäß Anspruch 1 oder 2, **dadurch gekennzeichnet, dass** das offene Ende des Zylinders (14, 114, 214) dazu vorgesehen ist, es dem Kolben (20, 120, 220) zu ermöglichen, eine Freigabeposition einzunehmen, in der der Kolben von dem Volumen der Dosierkammer losgelöst ist.

4. Vorrichtung gemäß Anspruch 3, **dadurch gekennzeichnet, dass** das offene Ende des Zylinders eine Öffnung (15, 115) aufweist, die das vollständige Herausziehen des Kolbens aus dem Zylinder in der Freigabeposition des Kolbens ermöglicht.

5. Vorrichtung gemäß Anspruch 3 oder 4, **dadurch gekennzeichnet, dass** sie Mittel umfasst, um, wenn sich der Kolben (20, 120, 220) in Freigabeposition befindet, ein Waschen der Kammer (12, 112, 213) zu ermöglichen, wobei eine Waschflüssigkeit durch das offene Ende (15, 115) des Zylinders abgeleitet wird.

6. Vorrichtung gemäß Anspruch 5, **dadurch gekennzeichnet, dass** der Produkteingang (16, 116, 216) oder der Produktausgang (18, 118, 218) auch als Eingang für die Waschflüssigkeit dient.

7. Vorrichtung gemäß Anspruch 5 oder 6, **dadurch gekennzeichnet, dass** der Aufnahmeraum (36, 136) einen Eingang (40) für die Waschflüssigkeit umfasst.

8. Vorrichtung gemäß einem der Ansprüche 1 bis 7, **dadurch gekennzeichnet, dass** sie mehrere ähnliche Ausrüstungen zum Dosieren und Bereitstellen eines Produktes (110) umfasst, deren jeweilige Kolben (122) durch ein gemeinsames Betätigungssystem (128, 130) betätigt werden.

9. Vorrichtung gemäß Anspruch 8, **dadurch gekennzeichnet, dass** die Betätigungsstangen (126) der jeweiligen Kolben (112) mit der Steuerstange (128) durch eine gemeinsame Verbindung (130) verbunden sind.

10. Vorrichtung gemäß einem der Ansprüche 1 bis 9, **dadurch gekennzeichnet, dass** sie zum Öffnen oder Schließen des Produkteingangs eine verformbare Membran (219) umfasst.

11. Vorrichtung gemäß einem der Ansprüche 1 bis 10, **dadurch gekennzeichnet, dass** sie einen Drehschieber (22, 122) umfasst, der geeignet ist, den Produkteingang (16, 116) oder den Produktausgang (18, 118) selektiv mit dem Volumen der Kammer (12, 112) in Verbindung zu bringen.

12. Vorrichtung gemäß Anspruch 11, **dadurch gekennzeichnet, dass** der Drehschieber (22, 122) geeignet ist, eine Versorgungsposition einzunehmen, in der er den Produkteingang (16, 116) mit dem Volumen der Kammer (12, 112) in Verbindung bringt, wobei er den Produkteingang vom Produktausgang (18, 118) isoliert, eine Bereitstellungsposition, in der er den Produktausgang (18, 118) mit dem Volumen der Kammer (12, 112) in Verbindung bringt, wobei er den Produktausgang vom Produkteingang (16, 116) isoliert, und eine Kurzschlussposition, in der er den Produkteingang und den Produktausgang (16, 116, 18, 118) miteinander in Verbindung bringt.

## Claims

1. A device for delivering metered quantities of liquid or pasty product, comprising at least one item of product metering and delivery equipment (10, 110), which includes a metering chamber (12, 112, 212) formed in a cylinder (14, 114, 214), the chamber having a first end (12A, 112A, 212A) at which a product inlet (16, 116, 216) and a product outlet (18, 118, 218) are situated, and a second end (12B, 112B) defined by a plunger (20, 120, 220) that is movable in a to-and-fro movement in the cylinder (14, 114, 214), between a filling position making it possible to supply products to the chamber through the product inlet and a discharge position making it possible to deliver the product contained in the chamber through the product outlet, the product inlet being able to be open for filling of the chamber and to be closed for discharge from the chamber, the plunger being maneuvered by a maneuvering rod (26, 126) that extends, from said plunger, in the direction (S) going from the first end toward the second end of the chamber and that leaves the cylinder, the maneuvering rod (26, 126, 226) being connected, outside the cylinder, to a control rod (28, 128, 228), which, from its connection (30, 130) with the maneuvering rod, extends in the direction (F) going from the second end toward the first end (28A, 128A) of the chamber and which itself is actuated in a to-and-fro movement by its end (28A, 128A) situated on the side of the first end of the chamber, **characterized in that** the end of the cylinder opposite the first end of the metering chamber (12, 112, 212) is open in a receiving enclosure (36, 136) in which the control rod (28, 128) extends, and said receiving enclosure (36, 136) is fastened to the end of the cylinder opposite the first end of the metering chamber (12, 112, 212) so as to collect any product leaks and protect the environment of the device with respect to such leaks.

2. The device according to claim 1, **characterized in that** the first and second ends (12A, 112A; 12B, 112B) of the metering chamber (12; 112; 212) are respectively the upper and lower ends of said chamber, and **in that** the lower end (14B; 114B) of the cylinder (14; 114; 214) is open in the receiving enclosure.

3. The device according to claim 1 or 2, **characterized in that** the open end of the cylinder (14, 114, 214) is arranged to allow the plunger (20, 120, 220) to adopt a released position, in which the plunger is released from the volume of the metering chamber.

4. The device according to claim 3, **characterized in that** the open end of the cylinder has an opening (15, 115) allowing the complete removal of the plunger relative to the cylinder in the released position of the plunger.

5. The device according to claim 3 or 4, **characterized in that** it includes means for allowing, when the plunger (20, 120, 220) is in the released position, washing of the chamber (12, 112, 212) by discharging a washing liquid through the open end (15, 115) of the cylinder.

6. The device according to claim 5, **characterized in that** the product inlet (16, 116, 216) or outlet (18, 118, 218) also serves as an inlet for the washing liquid.

7. The device according to claim 5 or 6, **characterized in that** the reception enclosure (36, 136) comprises an inlet (40) of the washing liquid.

8. The device according to any one of claims 1 to 7, **characterized in that** it includes several similar items of product metering and delivery equipment (110), the respective plungers (122) of which are actuated by a shared actuating system (128, 130).

9. The device according to claim 8, **characterized in that** the maneuvering rods (126) of the respective plungers (112) are connected to the control rod (128) by a shared link (130).

10. The device according to any one of claims 1 to 9, **characterized in that**, in order to open or close the product inlet, it includes a deformable membrane (219).

11. The device according to any one of claims 1 to 10, **characterized in that** it includes a rotary sliding gate (22, 122) capable of selectively causing the product inlet (16, 116) or the product outlet (18, 118) to communicate with the volume of the chamber (12, 112).

12. The device according to claim 11, **characterized in that** the rotary sliding gate (22, 122) is able to adopt a supply position in which it causes the product inlet (16, 116) to communicate with the volume of the chamber (12, 112) while isolating the product inlet from the product outlet (18, 118), a delivery position in which it causes the product outlet (18, 118) to communicate with the volume of the chamber (12, 112) while isolating the product outlet from the product inlet (16, 116), and a short-circuit position, in which it causes the product inlet and the product outlet (16, 116; 18, 118) to communicate with one another.
